# EUROPÄISCHE PATENTSCHRIFT

(11) **EP 1 390 838 B1**
(45) Veröffentlichungstag und Bekanntmachung des Hinweises auf die Patenterteilung: **01.12.2004**
(21) Anmeldenummer: 02742706.1
(22) Anmeldetag: 30.04.2002
(51) Int. Cl.: G06F 3/033

(54) **VERFAHREN UND ANORDNUNG ZUM NAVIGIEREN INNERHALB EINES BILDES**
METHOD AND DEVICE FOR NAVIGATING INSIDE AN IMAGE
PROCEDE ET DISPOSITIF DE NAVIGATION A L'INTERIEUR D'UNE IMAGE

(30) Priorität: 23.05.2001 DE 10125395
(43) Veröffentlichungstag der Anmeldung: 25.02.2004
(73) Patentinhaber: SIEMENS AKTIENGESELLSCHAFT, 80333 München (DE)
(72) Erfinder: ANDERT, Markus, 80799 München (DE); KOCOUREK, Christine, 81549 München (DE)
(86) Internationale Anmeldenummer: PCT/DE2002/001571
(87) Internationale Veröffentlichungsnummer: WO 2002/095566

(56) Entgegenhaltungen:
- EP-A- 0 880 090
- EP-A- 0 883 054
- DE-A- 19 963 764
- GB-A- 2 333 215
- RON PERSON: "Using Excel Version 5.0 for Windows" 1997 , QUE CORPORATION , INDIANAPOLIS XP002252869 46290 Seite 71, Absatz 1 -Seite 73, Absatz 5 Seite 71; Abbildung 3.5 Seite 538, letzter Absatz -Seite 539, letzter Absatz
- ADOBE SYSTEMS INCORPORATED: "Acrobat Reader 3.0 Online Guide" 1997 , ADOBE USER EDUCATION XP002252870 Seite 53; Abbildung 1 Seite 50, Absatz 1

## Beschreibung

Die Erfindung betrifft ein Verfahren und eine Anordnung zum Navigieren innerhalb eines Bildes, das insbesondere ausschnittsweise gemäß einem Zoomfaktor dargestellt wird.

Die rasante technische Entwicklung auf dem Gebiet der Mobilkommunikation hat in den letzten Jahren zur Entwicklung und Bereitstellung einer Vielzahl verschiedener Mobilfunktelefone geführt, die allerdings in der Regel ein kleinflächiges Display aufweisen. Zukünftige Mobiltelefone werden in der Lage sein, Internetinhalte, wie beispielsweise html-Seiten, über das Mobilfunknetz zu empfangen. Zur Darstellung derartiger Seiten auf den kleinflächigen Displays wird es erforderlich sein, deren Darstellung ausschnittsweise durchzuführen. Dies kann durch eine geeignete Navigationsfunktionen, insbesondere geeignete Zoom- und Scrollfunktionen praktikabel gestaltet sein; allerdings steht der komfortablen Handhabung derartiger Navigationsfunktionen insbesondere bei tragbaren Geräten, wie Mobiltelefonen, deren hoher Miniaturisierungsgrad entgegen.

Das Dokument "Using Excel Version 5.0 for Windows" (Ron Person, 14. Auflage 1997; siehe insbesondere: Seite 31 bis 33 und Seite 70 bis 73) beschreibt anhand eines Tabellenkalkulationsprogramms Verfahren zur Bildnavigation mit getrennten Eingabeelementen zur Änderung eines dargestellten Bildausschnitts und zur Verschiebung einer dem Bildausschnitt überlagerten Markerdarstellung.

Das Dokument "Acrobat Reader 3.0 On Line Guide" (Adobe User Education, 1997; siehe insbesondere : Seite 50-53) beschreibt ebenfalls ein Verfahren zur Bildnavigation bei dem durch Anzeigeelemente sowohl das Format des Gesamtbildes als auch die Position des dargestellten Bildausschnitts ausgegeben werden.

Der Erfindung liegt nun die Aufgabe zugrunde, ein Verfahren und eine Anordnung anzugeben, welche ein komfortables Navigieren innerhalb eines Bildes, insbesondere bei geringem Platzbedarf, ermöglichen.

Diese Aufgabe wird durch die Merkmale der unabhängigen Ansprüche gelöst. Vorteilhafte und zweckmäßige Weiterbildungen ergeben sich aus den abhängigen Ansprüchen.

Erfindungsgemäß wird also zumindest ein Bildausschnitt gemäß einem Zoomfaktor dargestellt. Durch Eingabeelemente wird entweder der dargestellte Bildausschnitt geändert, wenn der Zoomfaktor kleiner als ein Zoomschwellwert ist oder eine dem Bildausschnitt überlagerte Markerdarstellung verschoben, wenn der Zoomfaktor größer als ein Zoomschwellwert ist.

Der Begriff "Bild" umfaßt dabei auch einen Text oder Internet-Inhalte, wie beispielsweise html-Seiten. Die Darstellung des Bildes kann dabei beispielsweise auschnittsweise innerhalb eines Fensters, das einen auf einem Display dargestellten Rahmen bildet, erfolgen. Die Änderung eines Bildausschnittes umfaßt dabei auch dessen Verschiebung über Fenstergrenzen hinaus, wobei der außerhalb des Fensters liegende Bildanteil nicht mehr dargestellt wird, was insbesondere bei Texten auch "Scrollen" genannt wird.

Insbesondere die Verwendung desselben Eingabeelementes sowohl zur Veränderung des Bildausschnittes als auch zur Verschiebung des Markers ermöglicht folgende beispielhafte komfortable und intuitive Navigation durch ein auf einem tragbaren Gerät dargestelltes Bild:
Zunächst wird bei kleinem Zoomfaktor, d.h. übersichtlicher aber ungenauer Darstellung des Bildes mittels des Eingabeelementes grob der gewünschte Bildausschnitt gewählt, indem der dargestellte Bildausschnitt geändert, d.h. verschoben wird bzw. indem durch das Bild gescrollt wird. Wenn der gewünschte Bildausschnitt dargestellt ist, wird beispielsweise automatisch nach einem vorgegebenen Zeitraum oder manuell durch Nutzereingabe der Zoomfaktor vergrößert, wodurch die Darstellung des Bildes unübersichtlicher aber der entsprechende Bildausschnitt genauer dargestellt wird. Wenn der Zoomfaktor größer als ein Zoomschwellwert ist, dient das Eingabeelement der Verschiebung der eines nun dargestellten Markers. Ausgestaltungen der Erfindung sehen dabei vor, daß durch den Marker nun Menüpunkte oder html-Links selektierbar sind, oder daß ein weiteres Verschieben des Bildausschnittes erfolgt, wenn der Marker in einem entsprechenden vorgegebenen Randbereich des Fensters plaziert wird.

Zur Lösung der Aufgabe ist ferner eine Anordnung angegeben, welche insbesondere zur Durchführung des erfindungsgemäßen Verfahrens oder einer seiner Weiterbildungen eingerichtet ist.

Die Erfindung wird im Folgenden anhand bevorzugter Ausführungsbeispiele näher beschrieben, zu deren Erläuterung nachstehend aufgelistete Figuren dienen:
Figur 1 Darstellung der Funktionsweise einer Ausführungsvariante der Erfindung;
Figur 2 Prinzipschaltbild einer Ausführungsvariante einer erfindungsgemäßen Anordnung.

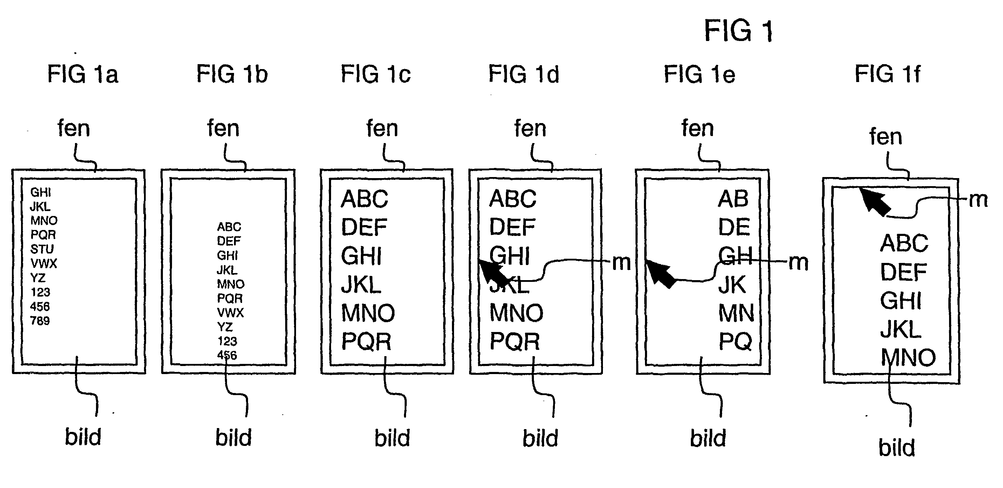

Figur 1 zeigt ein auf einem Display dargestelltes Fenster in fünf verschiedenen Stadien eines Ausführungsbeispiels eines erfindungsgemäßen Verfahrens zum Navigieren durch einen Text.

Figur 1a zeigt die Darstellung des Textes (bild) bei einem Zoomfaktor, der kleiner als ein vorgegebener Zoomschwellwert ist. Durch Betätigung des Eingabeelementes wird die Darstellung des Bildes derart verschoben, daß der interessierende Bildausschnitt (ABC) dargestellt wird (Figur 1b). Nun wird der Zoomfaktor beispielsweise durch eine entsprechende Nutzereingabe manuell oder nach Zeitablauf automatisch vergrößert, um den interessierenden Bildausschnitt (ABC) genauer darzustellen (Figur 1c). Falls der Zoomfaktor größer als ein vorgegebener Zoomschwellwert ist, wird ein Marker m dem dargestellten Bildausschnitt (bild) überlagert dargestellt (Figur 1d); außerdem hat eine Betätigung des Eingabeelementes nicht mehr die Verschiebung des Bildausschnittes (bild) sondern eine Verschiebung des Markers m zur Folge. Eine Ausgestaltung der Erfindung sieht jedoch vor, daß ein Verschieben der Darstellung des Bildes dann erfolgt, wenn der Marker sich in einem entsprechenden Randbereich des Fensters fen befindet. So erfolgt beispielsweise eine Verschiebung der Därstellung des Bildes nach rechts, wenn der Marker sich in einem vorgegebenen linken Randbereich des Fensters befindet (Figur 1e) und eine Verschiebung der Darstellung des Bildes nach unten, wenn der Marker sich in einem vorgegebenen oberen Randbereich des Fensters befindet (Figur 1f). Erfolgt die Navigation durch eine html-Seite oder eine entsprechende Internet-Seite eines anderen Formates, so ist es möglich, durch den Marker Internet-Links zu markieren und durch eine Betätigung eines Eingabeelementes, insbesondere des Eingabeelementes, das auch zur Verschiebung des Markers verwendet wird, Internet-Links auszuwählen.

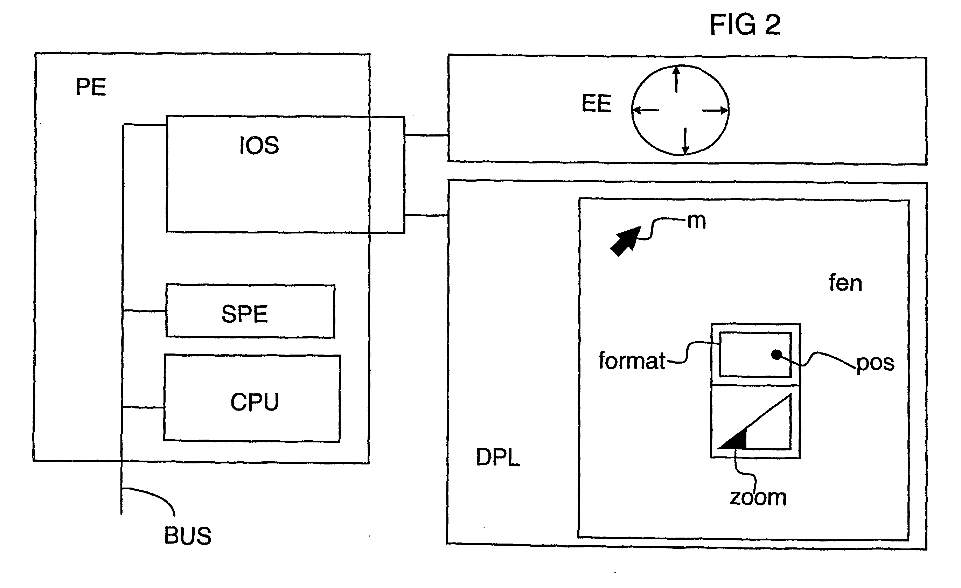

Figur 2 zeigt eine Ausführungsvariante einer erfindungsgemäßen Anordnung, welche beispielsweise Bestandteil eines Mobiltelefons oder eines tragbaren Computers sein kann.

Zur Steuerung der Anordnung, der Darstellunf von Displayinhalten und der Verfahren, welche durch die Anordnung ausgeführt werden, ist eine programmgesteuerte Prozessoreinrichtung PE, wie beispielsweise ein Microcontroller vorgesehen, der auch einen Prozessor CPU und eine Speichereinrichtung SPE umfassen kann.

Je nach Ausführungsvariante können dabei innerhalb oder außerhalb der Prozessoreinrichtung PE weitere - der Prozessoreinrichtung zugeordnete, zur Prozessoreinrichtung gehörende, durch die Prozessoreinrichtung gesteuerte oder die Prozessoreinrichtung steuernde - Komponenten, wie beispielsweise ein digitaler Signalprozessor oder weitere Speichereinrichtungen angeordnet sein, deren prinzipielle Funktion im Zusammenhang mit einer Prozessoreinrichtung einem Fachmann hinreichend bekannt ist, und auf welche daher an dieser Stelle nicht näher eingegangen wird.

Außerdem ist ein Eingabeelement EE vorgesehen, welches durch einen sogenannten Vier-Richtungs-Schalter, einen Joystick, ein Touchpad, einen Trackball oder gleichwirkende Gegenstände realisiert sein kann.

Zur Darstellung eines - ein Bild oder einen Bildauschnitt - umrahmenden Fensters fen ist ein Display DPL vorgesehen. Auf dem Display wird neben einem Marker (oder Zeiger) m auf (den Bildausschnitt überlagernd) oder neben dem Fenster ein erstes Anzeigeelement (format) dargestellt, welches das Format - beispielsweise Hoch- oder Querformat - des gesamten darzustellenden Bildes wiedergibt.

Ferner dient das Display DPL der Darstellung eines zweiten Anzeigelementes, von dem ein Anteil (zoom) hervorgehoben dargestellt wird, wobei der Anteil in Abhängigkeit von dem aktuellen Zoomfaktor der Darstellung des Bildausschnittes gewählt wird. Der hervorgehobene Anteil steigt beispielsweise linear mit dem Zoomfaktor an.

Durch ein drittes Anzeigeelement pos wird die Position des dargestellten Bildausschittes innerhalb des Gesamtbildes dargestellt, wobei die Position des dritten Anzeigeelementes relativ zu einem Referenzpunkt des ersten Anzeigeelementes, durch die Position der Markerdarstellung relativ zu einem Referenzpunkt des Bildes bestimmt ist.

Die unterschiedlichen Komponenten der Anordnung können über ein Bussystem BUS oder Ein-/Ausgabeschnittstellen IOS und gegebenenfalls geeignete Controller mit dem Prozessor CPU Daten austauschen.

Je nach Ausführungsvariante kann die Speichereinrichtung SPE, bei der es sich auch um einen oder mehrere flüchtige und/oder nicht flüchtige Speicherbausteine handeln kann, oder Teile der Speichereinrichtung SPE als Teil der Prozessoreinrichtung PE (in Figur dargestellt) realisiert sein oder als externe Speichereinrichtung (in Figur nicht dargestellt) realisiert sein, die außerhalb der Prozessoreinrichtung PE lokalisiert ist. In der Speichereinrichtung SPE sind die Programmdaten, wie beispielsweise die Steuerbefehle oder Steuerprozeduren, die zur Steuerung der Anordnung oder zur Steuerung der anhand der Anordnung durchgeführten Verfahren herangezogen werden, gespeichert.

Neben den oben erläuterten Ausführungsvarianten der Erfindung liegt eine Vielzahl weiterer Ausführungsvarianten im Rahmen der Erfindung, welche hier nicht weiter beschrieben werden, aber anhand der erläuterten Ausführungsbeispiele einfach in die Praxis umgesetzt werden können.

## Patentansprüche

1. Verfahren zum Navigieren innerhalb eines Bildes,
- bei dem zumindest ein Bildausschnitt gemäß einem Zoomfaktor dargestellt wird,
- bei dem durch ein Eingabeelement (EE) der dargestellte Bildausschnitt geändert wird, wenn der Zoomfaktor kleiner als ein Zoomschwellwert ist, und
bei dem durch das Eingabeelement eine dem Bildausschnitt überlagerte Markerdarstellung (m) verschoben wird, wenn der Zoomfaktor größer als ein Zoomschwellwert ist.

2. Verfahren nach Anspruch 1,
- bei dem mittels des ersten Eingabeelementes (EE) eine von zumindest vier Richtungen ausgewählt wird.

3. Verfahren nach einem der vorhergehenden Ansprüche,
- bei dem durch ein erstes Anzeigeelement das Format (format) des Bildes angezeigt wird.

4. Verfahren nach einem der vorhergehenden Ansprüche,
- bei dem ein Anteil (zoom) eines zweiten Anzeigeelementes hervorgehoben dargestellt wird, wobei der Anteil in Abhängigkeit von dem aktuellen Zoomfaktor der Darstellung des Bildausschnittes gewählt wird.

5. Anordnung zum Navigieren innerhalb eines Bildes
- mit einer Anzeigeeinrichtung (DPL) zur Darstellung zumindest eines Bildausschnittes gemäß einem Zoomfaktor, und zur Darstellung eines dem Bildausschnitt beweglich überlagerten Markers (m),
- mit einem Eingabeelement (EE), und
- mit einer Prozessoreinrichtung (PE) zur Steuerung der Darstellung des Bildausschnittes und der Markerdarstellung,
**dadurch gekennzeichnet:**
- **dass** durch das Eingabeelement der dargestellte Bildausschnitt geändert wird, wenn der Zoomfaktor kleiner als ein Zoomschwellwert ist, und
- **dass** durch das Eingabeelement eine dem Bildausschnitt überlagerte Markerdarstellung verschoben wird, wenn der Zoomfaktor größer als ein Zoomschwellwert ist.

6. Anordnung nach Anspruch 5,
- bei dem das erste Eingabeelement (EE) zur Auswahl einer von zumindest vier Richtungen ausgestaltet ist.

7. Anordnung nach einem der Ansprüche 5 bis 6,
- mit einer Anzeigeeinrichtung (DPL) zur Darstellung eines ersten Anzeigeelementes, und
- mit einer Prozessoreinrichtung (PE) zur Steuerung der Darstellung des ersten Anzeigeelementes, welche derart eingerichtet ist,
- dass durch das erste Anzeigeelement das Format (format) des Bildes angezeigt wird.

8. Anordnung nach einem der Ansprüche 5 bis 7,
- mit einer Anzeigeeinrichtung (DPL) zur Darstellung eines zweiten Anzeigeelementes, und
- mit einer Prozessoreinrichtung (EP) zur Steuerung der Darstellung eines zweiten Anzeigeelementes, welche derart eingerichtet ist,
- dass ein Anteil (zoom) des zweiten Anzeigeelementes hervorgehoben dargestellt wird, wobei der Anteil in Abhängigkeit von dem aktuellen Zoomfaktor der Darstellung des Bildausschnittes gewählt wird.

## Claims

1. Method for navigating within an image,
- wherein at least one image segment is displayed according to a zoom factor,
- wherein the displayed image segment is changed by an input element (EE) if the zoom factor is less than a zoom threshold value, and
wherein a marker display (m) superimposed on the image segment is moved by the input element if the zoom factor is greater than a zoom threshold value.

2. Method according to Claim 1,
- wherein one of at least four directions is selected by means of a first input element (EE).

3. Method according to one of the preceding Claims,
- wherein the format (format) of the image is displayed by a first display element.

4. Method according to one of the preceding Claims,
- wherein a portion (zoom) of a second display element is highlighted, the portion being selected as a function of the current zoom factor of the display of the image segment.

5. Arrangement for navigating within an image
- having a display device (DPL) for displaying at least one image segment according to a zoom factor, and for displaying a marker (m) that can be moved over the image segment,
- having an input element (EE) and,
- having a processor device (PE) for controlling the display of the image segment and the marker display,
**characterized in that**
- the displayed image segment is changed by the input element when the zoom factor is less than a zoom threshold value, and that
- a marker display superimposed on the image segment is moved by the input element when the zoom factor is greater than a zoom threshold value.

6. Arrangement according to Claim 5,
- wherein the first input element (EE) is designed to select one of at least four directions.

7. Arrangement according to one of Claims 5 to 6,
- having a display device (DPL) for displaying a first display element, and
- having a processor device (PE) for controlling the display of the first display element and which is configured in such a way that,
- the format (format) of the image is displayed by the first display element.

8. Arrangement according to one of Claims 5 to 7,
- having a display device (DPL) for displaying a second display element, and
- having a processor device (PE) for controlling the display of the second display element and which is configured in such a way that,
- a portion (zoom) of the second display element is highlighted, said portion being selected as a function of the current zoom factor of the display of the image segment.

## Revendications

1. Procédé de navigation à l'intérieur d'une image
- dans lequel au moins un segment d'image est représenté selon un facteur zoom,
- dans lequel le segment d'image représenté est modifié au moyen d'un élément d'entrée (EE), lorsque le facteur zoom est inférieur à une valeur de seuil zoom, et
- dans lequel une représentation de marqueur (m) superposée sur le segment d'image est déplacée au moyen de l'élément d'entrée, lorsque le facteur zoom est supérieur à une valeur de seuil zoom.

2. Procédé selon la revendication 1,
- dans lequel une d'au moins quatre directions est sélectionnée au moyen du premier élément d'entrée (EE).

3. Procédé selon l'une quelconque des revendications précédentes,
- dans lequel le format (format) de l'image est affiché au moyen d'un premier élément d'affichage.

4. Procédé selon l'une quelconque des revendications précédentes,
- dans lequel une portion (zoom) d'un second élément d'affichage est représentée en étant mise en évidence, la portion étant sélectionnée en fonction du facteur zoom actuel de la représentation du segment d'image.

5. Dispositif pour naviguer à l'intérieur d'une image,
- comprenant un dispositif d'affichage (DPL) pour la représentation au moins d'un segment d'image selon un facteur zoom, et pour la représentation d'un marqueur (m) superposé sur le segment d'image de manière mobile,
- comprenant un élément d'entrée (EE), et
- comprenant un dispositif processeur (PE) pour la commande de la représentation du segment d'image et de la représentation du marqueur,
**caractérisé en ce que**
- le segment d'image est modifié au moyen de l'élément d'entrée, lorsque le facteur zoom est inférieur à une valeur de seuil zoom, et
- **en ce qu'**une représentation du marqueur, superposée sur le segment d'image, est déplacée au moyen de l'élément d'entrée, lorsque le facteur zoom est supérieur à une valeur de seuil zoom.

6. Dispositif selon la revendication 5,
- dans lequel le premier élément d'entrée (EE) est conçu pour la sélection d'une d'au moins quatre directions.

7. Dispositif selon l'une quelconque des revendications 5 à 6,
- comprenant un dispositif d'affichage (DPL) pour la représentation d'un premier élément d'affichage, et
- comprenant un dispositif processeur (PE) pour la commande de la représentation du premier élément d'affichage, lequel est conçu de telle manière que
- le format (format) de l'image est affiché par le premier élément d'affichage.

8. Dispositif selon l'une quelconque des revendications 5 à 7,
- comprenant un dispositif d'affichage (DPL) pour la représentation d'un second élément d'affichage, et
- comprenant un dispositif processeur (EP) pour la commande de la représentation d'un second élément d'affichage, lequel est conçu de telle manière
- qu'une portion (zoom) du second élément d'affichage est représentée en étant mise en évidence, la portion étant sélectionnée en fonction du facteur zoom actuel de la représentation du segment d'image.
